# EUROPEAN PATENT SPECIFICATION

(11) **EP 1 961 839 B1**
(45) Date of publication and mention of the grant of the patent: **18.10.2017**
(21) Application number: 06834978.6
(22) Date of filing: 13.12.2006
(51) Int. Cl.: C23C 18/16, B32B 15/08, C08K 3/00, C08L 101/00, C08L 101/14, C25D 5/56

(54) **PLATED RESIN MOLDING**
PLATTIERTER HARZFORMKÖRPER
MOULAGE EN RESINE PLAQUE

(30) Priority: 15.12.2005 JP 2005361186
(43) Date of publication of application: 27.08.2008
(73) Proprietor: Daicel Polymer Ltd., Tokyo 1088230 (JP)
(72) Inventor: TAI, Toshihiro, Hyogo 671-1123 (JP)
(74) Representative: Grünecker Patent- und Rechtsanwälte PartG mbB
(86) International application number: PCT/JP2006/325308
(87) International publication number: WO 2007/069769

(56) References cited:
- EP-A1- 0 810 298
- EP-A2- 1 041 109
- WO-A1-2005/080075
- JP-A- 09 041 151
- JP-A- 10 046 019
- JP-A- 2003 166 067
- JP-A- 2004 002 996
- JP-A- 2004 099 884
- JP-A- 2004 189 863
- JP-A- 2005 231 219
- JP-A- 2005 232 338
- JP-B2- H0 699 630
- US-A1- 2002 099 117
- DATABASE WPI Week 198809, Derwent Publications Ltd., London, GB; AN 1988-060416 -& JP S6 315845 A (TOYOBO KK) 22 January 1988

## Description

The present invention relates to a plated resin molded article having high plating strength and beautiful appearance.

Resin molded article such as ABS resin or polyamide resin is used for automobile parts in order to decrease the weight of the automobile. To provide the resin molded article with luxurious and beautiful appearance, the resin molded article is plated by copper, nickel, and the like.

Conventional practice of plating the molded article such as ABS resin essentially requires an etching step to roughen the surface of the resin molded article after the degreasing step to increase the adhesive strength between the resin molded article and the plating layer. In the case of plating an ABS resin molded article or a polypropylene molded article, for example, there is a need of applying etching treatment, after the degreasing step, using a chromic acid bath (a mixed solution of chromium trioxide and sulfuric acid) at temperatures ranging from 65°C to 70°C for 10 to 15 minutes. The resulting wastewater contains toxic hexavalent chromic acid ion. Consequently, there is absolutely needed the steps of reducing the hexavalent chromic acid ion to trivalent ion, and neutralizing the trivalent ion, which raises a problem of wastewater treatment.

Considering the safety at the workplace and the environmental influence of the wastewater, it is preferable to eliminate the etching treatment which uses the chromic acid bath. Elimination of the etching treatment, however, raises a problem of failing to attain increased adhesive strength of plating layer to the molded article prepared from ABS resin and the like.

The inventions disclosed in JP-A 2003-82138, JP-A 2003-166067 and JP-A 2004-2996 solved the above technological problems in related art and provided plated resin molded article having a metal-plating layer having high adhesive strength in spite of eliminating the etching treatment using chromic acid bath.

The invention disclosed in JP-B 6-99630, improves the effect of surface-roughening by hydrochloric acid etching, and adds a large quantity of coarse particles of an inorganic filler in the step of plating a polyamide molded article in order to increase the adhesive strength of the metal plating, (according to Examples, the inorganic filler of 2.2 to 12 µ of mean particle size is added by a quantity of 40% by weight). Furthermore, a gummy substance is added to suppress the reduction of impact strength, which reduction is caused by the addition of inorganic filler.

The inventions of JP-A 2003-82138, JP-A 2003-166067 and JP-A 2004-2996 have an issue of improving the die-releasing when the injection molding method is applied to manufacture the resin molded article before plating because of low elastic modulus and slow solidification speed. The invention of JP-B 6-99630 expects good die-releasing at injection molding owing to the addition of large quantity of inorganic filler.

EP0810298 (A1) discloses a resin molding with a metallic layer formed on the surface thereof, which has both fluidity high enough to be moldable into a thin molding and high rigidity and, in addition, possesses adhesion to plating sufficient for practical use. A resin molding prepared by molding a composite material comprising (a) 99 to 50 % by weight of a thermoplastic resin incapable of forming an anisotropic molten phase and (b) 1 to 50 % by weight of a liquid crystalline polyester capable of forming an anisotropic molten phase is pre-etched with an organic solvent followed by the formation of a metallic layer on the surface thereof by wet plating.

WO2005080075 (A1) a plated resin formed article which comprises a thermoplastic resin formed article comprising a composition containing (A) 10 to 90 mass % of a matrix resin exhibiting a water absorption (ISO 62) after the immersion in water at 23°C for 24 hr of 0.6 % or more and (B) 90 to 10 mass % of a resin, except a styrenic resin, exhibiting a water absorption (ISO 62) after the immersion in water at 23°C for 24 hr of less than 0.6 %, and a metal plating layer formed on the surface of the thermoplastic resin formed article, wherein the thermoplastic resin formed article has not been subjected to an etching treatment using an acid containing a heavy metal. The plated resin formed article exhibits high adhesiveness of the plating layer.

EP1041109 (A2) discloses a polyamide composition comprising 100 parts by weight of a polyamide resin and 0.005 to 5 parts by weight of a polyhydric alcohol having a melting point of 150 to 280°C. The polyamide composition prepared by the present invention does not need a pretreatment step, has both good fluidity and mechanical strength and is used mainly in the DSI or DRI technique which is an injection welding technique.

US2002099117 (A1) discloses a polyamide resin composition having excellent weather resistance and coating adhesion property and more particularly, to the polyamide resin composition capable of direct painting without pretreatment of primer and maintaining excellent weather resistance for a long period of exposure outside by adding an appropriate amount of a weathering stabilizer and a coating adhesion improver.

Since, however, large quantity of inorganic filler exists and since the inorganic filler is dissolved and removed by the acid treatment to create irregular surface, there arises a problem of deterioration of appearance after the metal plating, though the adhesive strength of the metal plating after the plating increases.

The present invention provides a plated resin molded article according to claim 1 which gives good die-releasing of the resin molded article during injection molding before the plating step, and which has high adhesive strength and good appearance. Specifically, the present invention provides a plated resin molded article having a metal plating layer on the surface thereof, which resin molded article is made of a resin composition comprising:
(A) a synthetic resin, wherein the synthetic resin of the (A) component contains 10 to 90% by mass of (A-1) a resin having 0.6% or higher water absorption in water at 23°C after 24 hours, (ISO62), and 10 to 90% by mass of (A-2) a resin having less than 0.6% of water absorption in water at 23°C after 24 hours, (ISO62);
(B) a polyhydric alcohol having a solubility in water (25°C) ranging from 0.01 g/100 g to 10 g/100 g in a quantity of 0.1 to 20 parts by mass relative to 100 parts by mass of the (A) component;
(C) a compatibilizer in a quantity of 1 to 20 parts by mass relative to 100 parts by mass of the (A) component; and
(D) an inorganic filler in a quantity of 1 to 55 parts by mass relative to 100 parts by mass of the sum of (A), (B) and (C) components, wherein said resin molded article is not treated by etching with an acid containing chromium and/or manganese.

In a preferred embodiment, the inorganic filler of the (D) component in the plated resin molded article of the invention is selected from the group consisting of talc, calcium carbonate, wollastonite and kaolin.

When injection molding method is applied as the method for manufacturing resin molded article before the plating treatment, the plated resin molded article according to the present invention can improve the productivity because of good die-releasing. In addition, the plated resin molded article of the present invention has high adhesive strength of plating and keeps good appearance immediately after the plating and further after the heat-cycle test.

### <Resin composition>

### ((A) component)

The synthetic resin of (A) component is one or more of resin selected from (A-1) a resin having 0.6% or higher water absorption in water at 23°C after 24 hours, (ISO62), and (A-2) a resin having less than 0.6% of water absorption in water at 23°C after 24 hours, (ISO62).

As of the resin of (A-1) component, the one having 0.6 to 11% of water absorption is preferred, the one having 0.6 to 5% thereof is further preferred, and the one having 0.6 to 2.5% thereof is most preferred. As of the resin of (A-2) component, the one having 0.4% or less of water absorption is preferred.

According to the present invention, it is preferable to combine one or more resin selected from the resins of (A-1) component with one or more resin selected from the resins of (A-2) component.

As for the resin of (A-1) component, preferred ones are polyamide-based resin, acrylate-based resin, cellulose-based resin, vinyl alcohol-based resin, and polyether-based resin which satisfy the above saturated water absorption, more preferred ones are the polyamide-based resin and the polyether-based resin, and most preferred one is the polyamide-based resin.

Examples of the polyamide-based resin are: nylon 66, polyhexamethylene cebacamide (nylon 6·10), polyhexamethylene dodecanamide (nylon 6·12), polydodecamethylene dodecanamide (nylon 1212), polymethaxylylene adipamide (nylon MXD6), polytetramethylene adipamide (nylon 46) and a mixture and copolymer thereof; copolymer such as nylon 6/66, nylon 66/6T (6T: polyhexamethylene terephthalamide) containing 50% by mole or less of the 6T component, nylon 66/6I (6I: polyhexamethylene isophthalamide) containing 50% by mole or less of 6I component, nylon 6T/6I/66, and nylon 6T/6I/610; and copolymer such as polyhexamethylene terephthalamide (nylon 6T), polyhexamethylene isophthalamide (nylon 6I), poly(2-methylpentamethylene)terephthalamide (nylon M5T), poly(2-methylpentamethylene)isophthalamide (nylon M5I), nylon 6T/6I, and nylon 6T/M5T. Other than above, there are applicable a copolymerized nylon such as amorphous nylon, which amorphous nylon includes a polycondensation product of terephthalic acid and trimethylhexamethylene diamine.

Furthermore, there are applicable a ring-opening polymerization product of cyclic lactam, a polycondensation product of an amino-carboxylic acid, and a copolymer composed of these components: specifically aliphatic polyamide resin such as nylon 6, poly-ω-undecanamide (nylon 11) or poly-ω-dodecanamide (nylon 12), and a copolymer of them, a copolymer with polyamide, composed of diamine and dicarboxylic acid, such as nylon 6T/6, nylon 6T/11, nylon 6T/12, nylon 6T/6I/12, nylon 6T/6I/610/12, and a mixture of them.

As for the polyamide-based resin, PA (nylon) 6, PA (nylon) 66, and PA (nylon) 6/66 are preferred among the above.

Examples of the resin of (A-2) component are: olefin-based resin, styrene-based resin, polyphenylene ether resin, polyester resin such as polybutylene terephthalate resin or polyethylene terephthalate resin, liquid crystalline polymer, thermoplastic resin such as polyphenylene sulfide resin, polyacetal resin or polycarbonate resin, thermosetting resin such as epoxy resin, unsaturated polyester resin or phenol resin, which resins satisfy the above water absorption.

The olefin-based resin is a polymer having C2-C8 mono-olefin as the main monomer component. It includes one or two or more selected from low density polyethylene, high density polyethylene, linear low density polyethylene, polypropylene, ethylene-propylene random copolymer, ethylene-propylene block copolymer, polymethyl pentene, polybutene-1, and modified polymers thereof. As of these, polypropylene is preferred.

The styrene-based resin includes polymer of styrene and styrene-derivative such as α-substituted or nuclei-substituted styrene. There are also included copolymer composed mainly of these monomers, and further composed of monomer such as vinyl compound such as acrylonitrile, acrylic acid or methacrylic acid and/or conjugate diene compound such as butadiene or isoprene. For example, there are polystyrene, high-impact polystyrene (HIPS) resin, acrylonitrile-butadiene-styrene copolymer (ABS) resin, acrylonitrile-styrene copolymer (AS resin), styrene-methacrylate copolymer (MS resin) and styrene-butadiene copolymer (SBS resin).

The polystyrene-based resin may contain a styrene-based copolymer in which an unsaturated compound containing carboxyl group is copolymerized to improve the compatibility or the reactivity with the polyamide-based resin. The styrene-based copolymer in which an unsaturated compound containing carboxyl group is polymerized is a copolymer prepared by polymerizing an unsaturated compound containing carboxyl group, and at need, other monomer copolymerizable therewith, in the presence of a gummy polymer.

Examples of the components are the following.
1) A graft polymer prepared by polymerizing a monomer containing an aromatic vinyl monomer as the essential component, or a monomer containing an aromatic vinyl and an unsaturated compound containing carboxyl group as the essential components, in the presence of a gummy polymer prepared by copolymerizing an unsaturated compound containing carboxyl group.
2) A graft copolymer prepared by copolymerizing a monomer containing an aromatic vinyl and an unsaturated compound containing carboxyl group as the essential components, in the presence of a gummy polymer.
3) A mixture of a gum-strengthened styrene-based resin in which the unsaturated compound containing carboxyl group is not copolymerized, and a copolymer of an unsaturated compound containing carboxyl group with a monomer containing an aromatic vinyl as the essential components.
4) A mixture of above 1) and 2) with a copolymer containing an unsaturated compound containing carboxyl group and an aromatic vinyl as the essential components.
5) A mixture of above 1) to 4) with a copolymer containing an aromatic vinyl as the essential component.

As of above 1) to 5), the aromatic vinyl prefers styrene, and the monomer copolymerizing with aromatic vinyl prefers acrylonitrile. The content of unsaturated compound containing carboxyl group in the styrene-based resin is preferably in a range from 0.1 to 8% by mass, and more preferably from 0.2 to 7% by mass.

The content of the (A-1) component is in a range from 10 to 90% by mass, preferably from 20 to 80% by mass, further preferably from 30 to 70% by mass, and most preferably from 30 to 60% by mass. The content of the (A-2) component is in a range from 10 to 90% by mass, preferably from 20 to 80% by mass, further preferably from 30 to 70% by mass, and most preferably from 40 to 70% by mass.

### ((B) component)

The water-soluble substance of the (B) component is the one having the solubility in water (25°C) from 0.01 g/100 g to 10 g/100 g.

Applicable water-soluble substance of the (B) component includes the following ones which satisfy the above solubility: polyhydric alcohol such as propylene glycol, ethylene glycol, diethylene glycol, neopentyl glycol, butane diol, pentane diol, polyoxyethylene glycol, polyoxypropylene glycol, trimethylol propane, pentaerythritol, dipentaerythritol or glycerin.

The (B) component prefers pentaerythritol (solubility of 7.2 g/100 g) and dipentaerythritol (solubility in water (20°C) of 0.22 g/100 g).

The content of the (B) component is in a range from 0.1 to 20 parts by mass to 100 parts by mass of the (A) component, preferably from 0.1 to 10 parts by mass, and more preferably from 0.5 to 5 parts by mass.

### ((C) component)

The compatibilizer ((C) component) is the component being added at need according to claim 1. If the resin of (A) component selects two or more kinds of resins having low compatibility with each other, the compatibilizer is preferably selected from known compatible substances depending on the use resins.

The content of the (C) component is in a range from 1 to 20 parts by mass to 100 parts by mass of the (A) component, preferably from 1 to 15 parts by mass, and more preferably from 1 to 10 parts by mass.

### ((D) component)

The inorganic filler of the (D) component can adopt a filler in granular or powdery shape, or a filler in fibrous shape. The inorganic filler of the (D) component is a component to improve the die-releasing on injection molding of the resin molded article as the target of plating, and is not a component to function for increasing the plating adhesive strength after the plating.

Applicable filler in granular or powdery shape includes talc, carbon black, graphite, titanium dioxide, silica, mica, calcium sulfate, calcium carbonate (heavy calcium carbonate and precipitated calcium carbonate), barium carbonate, magnesium carbonate, magnesium sulfate, barium sulfate, oxysulfate, tin oxide, alumina, kaolin, silicon carbide, metal powder, glass powder, glass flake, and glass bead.

The filler in granular or powdery shape preferably has a mean particle size of 100 µm or less, more preferably 50 µm or less, further preferably 10 µm or less, and most preferably 5 µm or less. By regulating the mean particle size of the (D) component to the above range, the die-releasing during the injection molding improves, and the appearance after plating becomes fine. The mean particle size is determined by the sedimentation balance, and is expressed by the median grain size (D50).

Applicable filler in fibrous shape includes wollastonite, glass fiber, milled glass fiber, carbon fiber, milled carbon fiber, potassium titanate whisker, aluminum borate whisker, zinc oxide whisker, and attapulgite.

As for the (D) component, the fibrous filler prefers wollastonite, the granular or powdery filler prefers talc, calcium carbonate (specifically precipitated calcium carbonate having small mean particle size), and kaolin. When calcium carbonate is used, it preferably has 2 µm or smaller mean particle size, and further preferably has 1.5 µm or less, 1.0 µm or less, 0.5 µm or less, and 0.1 µm or less.

The content of the (D) component is in a range from 1 to 55 parts by mass to 100 parts by mass of the sum of (A), (B), and (C) components, preferably from 1 to 40 parts by mass, more preferably from 1 to 35 parts by mass, and most preferably from 5 to 25 parts by mass. By regulating the content of the (D) component to the above range, the die-releasing during the injection molding improves, and the appearance after plating becomes fine.

### (Other components)

In the present invention, there can be further added surfactant and/or coagulant. The surfactant may be the surfactant (emulsifier) used for manufacturing the (A) component and remained in the resin during the emulsion polymerization, or a surfactant separately added to the (A) component in the case that the manufacturing method does not use emulsifier, such as the case of bulk polymerization.

The surfactant and the coagulant may be those used in the emulsion polymerization of resin, or may be the ones other than those used in emulsion polymerization. The surfactant is preferably anionic surfactant, cationic surfactant, nonionic surfactant and amphoteric surfactant.

The applicable surfactant includes one or more surfactant selected from anionic surfactants such as fatty acid salt, rosinate, alkyl sulfate, alkylbenzene sulfonate, alkyldiphenylether sulfonate, polyoxyethylene alkylether sulfonate, sulfosuccinic acid diester salt, α-olefin sulfate ester salt or α-olefin sulfonic acid salt; cationic surfactant such as mono- or di-alkyl amine, polyoxyethylene additive thereof, or mono- or di-long chain alkyl quaternary ammonium salt; nonionic surfactant such as alkyl glucoside, polyoxyethylene alkyl ether, polyoxyethylene alkylphenyl ether, sucrose fatty acid ester, sorbitan fatty acid ester, polyoxyethylene sorbitan fatty acid ester, polyethylene fatty acid ester, polyoxyethylene propylene block copolymer, fatty acid monoglyceride or amine oxide; and amphoteric surfactant such as carbobetaine, sulfobetaine or hydroxysulfobetaine.

The content of surfactant in the resin composition is preferably in a range from 0.01 to 10 parts by mass to 100 parts by mass of the (A) component, more preferably from 0.01 to 5 parts by mass, and most preferably from 0.01 to 2 parts by mass.

According to the present invention, there can be further added one or more phosphorus-based compound selected from:
condensation phosphoric acid ester such as triphenyl phosphate, tricresyl phosphate, trixylenyl phosphate, tris(isopropylphenyl)phosphate, tris(o- or p-phenylphenyl)phosphate, trinaphthyl phosphate, cresyl diphenyl phosphate, xylenyl diphenyl phosphate, diphenyl(2-ethylhexyl)phosphate, di(isopropylphenyl)phenyl phosphate, o-phenylphenyl dicresyl phosphate, tris(2,6-dimethylphenyl)phosphate, tetraphenyl-m-phenylene diphosphate, tetraphenyl-p-phenylene diphosphate, phenyl resolcin, polyphosphate, bisphnol A-bis(diphenylphosphate), bisphenol A-polyphenylphosphate or dipyrocatechol hypophosphate;
fatty acid-aromatic phosphoric acid ester such as orthophosphoric acid ester such as diphenyl(2-ethylhexyl)phosphate, diphenyl-2-acroyl oxyethyl phosphate, diphenyl-2-methacroyloxy ethyl phosphate, diphenyl neopentyl phosphate, pentaerithrytol diphenyl diphosphate or ethylpyrocatechol phosphate; and
An alkali metal salt of melamine polyphosphate, tripolyphosphate, pyrophosphate, orthophosphate or hexamethaphosphate, phosphinic acid-based compound such as phytic acid, or alkali metal salt or alkanol amine salt thereof.

Furthermore, as phosphorus-based compound other than above, there can be used known phosphorus-based compounds applied to fire-retardant and antioxidant for resins.

The content of the phosphorus-based compound in the resin composition is preferably in a range from 0.1 to 30 parts by mass to 100 parts by mass of the (A) component, more preferably from 0.1 to 20 parts by mass, and most preferably from 0.1 to 10 parts by mass.

To the resin composition according to the present invention, varieties of known additives can be added depending of the uses of the resin molded article.

### <Plated resin molded article>

The plated resin molded article according to the present invention uses the above-described resin composition, and is subjected to known molding method such as injection molding or extrusion, thus obtaining a resin molded article in desired shape depending on the use, then is treated by plating in accordance with the following-given procedure. The plated resin molded article of the present invention is obtained eliminating the etching treatment by an acid containing chromium and/or manganese for the resin molded article for plating, in the plating step.

The applicable method for plating includes the method (I) (plating method containing electroless plating step) which is described below and which is described in Examples of the inventions disclosed in JP-A 2003-82138, JP-A 2003-166067 and JP-A 2004-2996, and the method (II) containing direct plating step, which is described below. For both plating methods, there applies no treatment of etching by an acid containing chromium and/or manganese on the surface of the resin molded article for plating.
(I) The method described in Examples of the inventions disclosed in JP-A 2003-82138, JP-A 2003-166067 and JP-A 2004-2996, (the plating method containing electroless plating step)
   (1) Degreasing step
   (2) Acid contact treatment step
   (3) Catalyst addition step
   (4) First activation step
   (5) Second activation step
   (6) Nickel electroless plating step
   (7) Acid activation step
   (8) Copper electroplating step
(II) Plating method containing direct plating step
   (1) Degreasing step
   (2) Acid contact treatment step (Etching step)
   (3) Catalyst addition step
   (4) Direct plating step
   (5) Copper electroplating step

In the (II) plating method, the degreasing step, the acid contact treatment step, the catalyst addition step, and the copper electroplating step are the same to those described in Examples of the inventions disclosed in JP-A 2003-82138, JP-A 2003-166067 and JP-A 2004-2996. However, in the "(2) acid contact treatment step" of the (II) plating method uses higher concentration acid than that of the " (2) acid contact treatment step" of the (I) plating method.

In the " (2) acid contact treatment step" of the (II) plating method, an acid can be used, selected from hydrochloric acid, phosphoric acid, sulfuric acid, and then an organic acid selected from acetic acid, citric acid and formic acid.

For the case of hydrochloric acid, preferred one has 1.5 to 3.5 normal, more preferably from 1.8 to 3.5 normal, and most preferably from 2 to 3 normal.

The treatment of the step can use, for example, a method of immersing the resin molded article in an acid, specifically the method of immersing in an acid at 10°C to 80°C for 0.5 to 20 minutes. When a hydrochloric acid of 1.5 to 3.5 normal is used, there can be applied a method of immersing in an aqueous solution of hydrochloric acid of above concentration range at 20°C to 60°C for 1 to 10 minutes.

The (II) plating method containing the direct plating step is a known method, disclosed in JP-A 5-239660, WO 98/45505 (Japanese Patent No. 3208410), and JP-A 2002-338636 (Paragraph 5).

The direct plating step uses a plating solution containing a metal compound called the "selector liquid", a reducing compound and a metal hydroxide, thus forming a very thin conductive layer compared with the plating layer (conductive layer) formed by the conventionally applied chemical plating.

The metal compound prefers copper compound, such as copper sulfate, copper chloride, copper carbonate, copper oxide or copper hydroxide. The content of copper compound is preferably in a range from 0.1 to 5 g/L as copper, and more preferably from 0.8 to 1.2 g/L.

The reducing compound does not contain substance having strong reducing power, such as formalin or phosphinic acid, which are normally used in known electroless plating (chemical plating), thus the applied reducing compound has weak reducing power compared with the above ones, including following compounds.

They include tin(II)chloride, sodium borohydride, dimethylamine borane, trimethylamine borane, formic acid or salt thereof, alcohol such as methanol, ethanol, propanol, ethylene glycol or glycerin, and salt thereof.

They also include reducing saccharide such as glucose, sorbite, cellulose, sucrose, mannite or gluconolactone. The content of sucrose is preferably in a range from 3 to 50 g/L, and more preferably from 10 to 20 g/L.

The applicable metal hydroxide includes sodium hydroxide, potassium hydroxide, and lithium hydroxide. The content of the metal hydroxide is preferably in a range from 10 to 80 g/L, and more preferably from 30 to 50 g/L.

The selector liquid can contain, at need, a complexing agent. Applicable complexing agent includes hidantoines and organic carboxylic acids. The hidantoines include hidantoine, 1-methyl hidantoine, 1,3-dimethyl hidantoine, 5,5-dimethyl hidantoine, and alantoine. The organic carboxylic acids include citric acid, tartaric acid, succinic acid, and salt thereof. The content of complexing agent in the selector is preferably in a range from 2 to 50 g/L, and more preferably from 10 to 40 g/L.

The pH of the selector liquid is preferably in a range from 10.0 to 14.0, and more preferably from 11.5 to 13.5.

Examples of applicable selector liquid are the plating bath described in Example 1 (c) of JP-A 5-239660, (paragraph 31), and the baths 1 to 8 of the present invention, described in Example of WO 98/45505 (Japanese Patent No. 3208410). At need, other known components can be added.

The treatment of direct plating step can apply a method in which the temperature of the selector liquid is adjusted to, preferably, 20°C to 70°C, more preferably from 35°C to 50°C, followed by immersing the resin molded article in the selector liquid for about 30 seconds to about 20 minutes, preferably from 3 to 5 minutes.

Since the treatment of direct plating step forms very thin conductive layer on the surface of the resin molded article, direct electroplating can be applied in the next step.

The plated resin molded article according to the present invention preferably shows no change in appearance under the visual observation after the following-described heat cycle tests.

### (Heat cycle test 1)

A specimen of plated resin molded article having a size of 100 mm in length, 50 mm in width, and 3 mm in thickness is held at -30°C for 60 minutes, at room temperature (20°C) for 30 minutes, at 90°C for 60 minutes, and then at room temperature (20°C) for 30 minutes. The steps are counted as one cycle. Total three cycles are given as the heat cycle test 1.

### (Heat cycle test 2)

A specimen of plated resin molded article having a size of 100 mm in length, 50 mm in width, and 3 mm in thickness is held at -30°C for 60 minutes, at room temperature (20°C) for 30 minutes, at 100°C for 60 minutes, and then at room temperature (20°C) for 30 minutes. The steps are counted as one cycle. Total three cycles are given as the heat cycle test 2.

The shape of the resin molded article, the kind and thickness of the plating layer, according to the present invention can be adequately selected depending on the use, and they can be applied to various uses. In particular, the plated resin molded article according to the present invention is suitable for the uses of automobile parts such as bumper, emblem, wheel cap, interior parts, and exterior parts.

### Examples

### (Resin composition)

### (A) component

(A-1-1): Polyamide (Polyamide 6, manufactured by Ube Industries, Ltd., UBE Nylon 6 1013B, water absorption of 1.8%)
(A-1-2): Polyamide (Polyamide 66, manufactured by Ube Industries, Ltd., UBE Nylon 66 2020B, water absorption of 1.3%)
(A-2-1): AS resin (Styrene quantity of 75% by mass, acrylonitrile quantity of 25% by mass)
(A-2-2): ABS resin (Styrene quantity of 45% by mass, acrylonitrile quantity of 15% by mass, gum quantity of 40% by mass)
(A-2-3): Polypropylene resin (J713M, manufactured by Grand Polymer Co., Ltd.)

### (B) component

(B-1): Dipentaerythritol (manufactured by Koei Chemical Company, Ltd.)

### (C) component

(C-1): Acid-modified ABS resin (Styrene quantity of 42% by mass, acrylonitrile quantity of 16% by mass, gum quantity of 40% by mass, methacrylic acid quantity of 2% by mass)
(C-2): Acid-modified ABS resin (Styrene quantity of 40% by mass, acrylonitrile quantity of 14% by mass, gum quantity of 40% by mass, methacrylic acid quantity of 6% by mass)
(C-3): Acid-modified polypropylene resin (E109H, manufactured by Grand Polymer Co., Ltd.)

### (D) component

(D-1): Wollastonite (PH330, manufactured by JFE Mineral Company, Ltd., mean particle size of 3.2 µm)
(D-2): Talc (5000S, manufactured by Hayashi-Kasei Co., Ltd., mean particle size of 2.8 µm)
(D-3): Calcium carbonate (Calfine 200, manufactured by Maruo Calcium Co., Ltd., mean particle size of 0.07 µm)
(D-4): Calcium carbonate (SL-2200, manufactured by Takehara Chemical Industrial Co., Ltd., mean particle size of 1.3 µm)
(D-5): Fired kaolin (NeoGen 2000, manufactured by Takehara Chemical Industrial Co., Ltd., mean particle size of 0.7 µm)

### Examples and Comparative Examples

The components given in Table 1 were mixed in a V-shape tumbler, which mixture was melted and kneaded by a twin-screw extruder (TEX30, cylinder temperature of 230°C, manufactured by The Japan Steel Works, Ltd.) to obtain pellets. The pellets were supplied to an injection molding machine (cylinder temperature of 240°C and die temperature of 60°C) to obtain a resin molded article having a size of 100 x 50 x 3 mm.

Thus prepared resin molded article was used as the specimen. The specimen was treated by (I) the plating containing the electroless plating step, or (II) the plating containing the direct plating step, thus formed the individual plated resin molded articles. The results of the heat cycle tests given to the respective plated resin molded articles are shown in Table 1.

### (I) Plating containing electroless plating step

### (1) Degreasing step

The specimen was immersed in an aqueous solution (40°C of liquid temperature) of 50 g/L of ACE CLEAN A-220 (manufactured by Okuno Chemical Industries Co., Ltd.) for 20 minutes.

### (2) Acid contact treatment step

The specimen was immersed in 100 ml of 1.0 N hydrochloric acid (40°C of liquid temperature) for 5 minutes.

### (3) Catalyst addition step

The specimen was immersed in a mixed aqueous solution (25°C of liquid temperature) of 150 ml/L of 35% by mass of hydrochloric acid and 40 ml/L of aqueous solution of CATALYST C (manufactured by Okuno Chemical Industries Co., Ltd.) for 3 minutes.

### (4) First activation step

The specimen was immersed in an aqueous solution (40°C of liquid temperature) of 100 ml/L 98% by mass of sulfuric acid for 3 minutes.

### (5) Second activation step

The specimen was immersed in an aqueous solution (40°C of liquid temperature) of 15 g/L of sodium hydroxide for 2 minutes.

### (6) Nickel electroless plating step

The specimen was immersed in a mixed aqueous solution (40°C of liquid temperature) of 150 ml/L of electroless nickel HR-TA (manufactured by Okuno Chemical Industries Co., Ltd.) and 150 ml/L of electroless nickel HR-TB (manufactured by Okuno Chemical Industries Co., Ltd.) for 5 minutes.

### (7) Acid activation step

The specimen was immersed in an aqueous solution (25°C of liquid temperature) of 100 g/L of TOP SAN (manufactured by Okuno Chemical Industries Co., Ltd.) for 1 minute.

### (8) Cupper electroplating step

The specimen was immersed in the plating bath (25°C of liquid temperature) same to that of Example 1, thus conducted electroplating for 120 minutes.

### (II) Plating containing direct plating step

### (1) Degreasing step

The resin molded article was immersed in an aqueous solution (40°C of liquid temperature) of 50 g/L of ACE CLEAN A-220 (manufactured by Okuno Chemical Industries Co., Ltd.) for 5 minutes.

### (2) Etching step (Acid contact treatment step)

The resin molded article was immersed in aqueous solution (40°C of liquid temperature) of 200 ml/L (2.3 N) of 35%by mass of hydrochloric acid for 5 minutes.

### (3) Catalyst addition step

The resin molded article was immersed in a mixed aqueous solution (25°C of liquid temperature) of 150 ml/L aqueous solution of 35% by mass of hydrochloric acid and 40 ml/L of CATALYST C (manufactured by Okuno Chemical Industries Co., Ltd.) for 3 minutes.

### (4) Direct plating step

The resin molded article was immersed in a selector liquid (45°C, pH 12) having the following composition for 3 minutes, thus formed a conductive layer on the surface of the resin molded article.

| | |
|---|---|
| Copper sulfate | 3 g/L |
| Sodium hydroxide | 30 g/L |
| Glucose | 10 g/L |
| Hidantoine | 10 g/L |

### (5) Copper electroplating step

The resin molded article was immersed in a plating bath (25°C of liquid temperature) having the following composition, thus conducted electroplating for 120 minutes.

### (Composition of plating bath)

| | |
|---|---|
| Copper sulfate (CuSO₄•5H₂O) | 200 g/L |
| Sulfuric acid (98%) | 50 g/L |
| Chlorine ion (Cl⁻) | 5 ml/L |
| TOP LUCINA 2000MU (manufactured by Okuno Chemical Industries Co., Ltd.) | 5 ml/L |

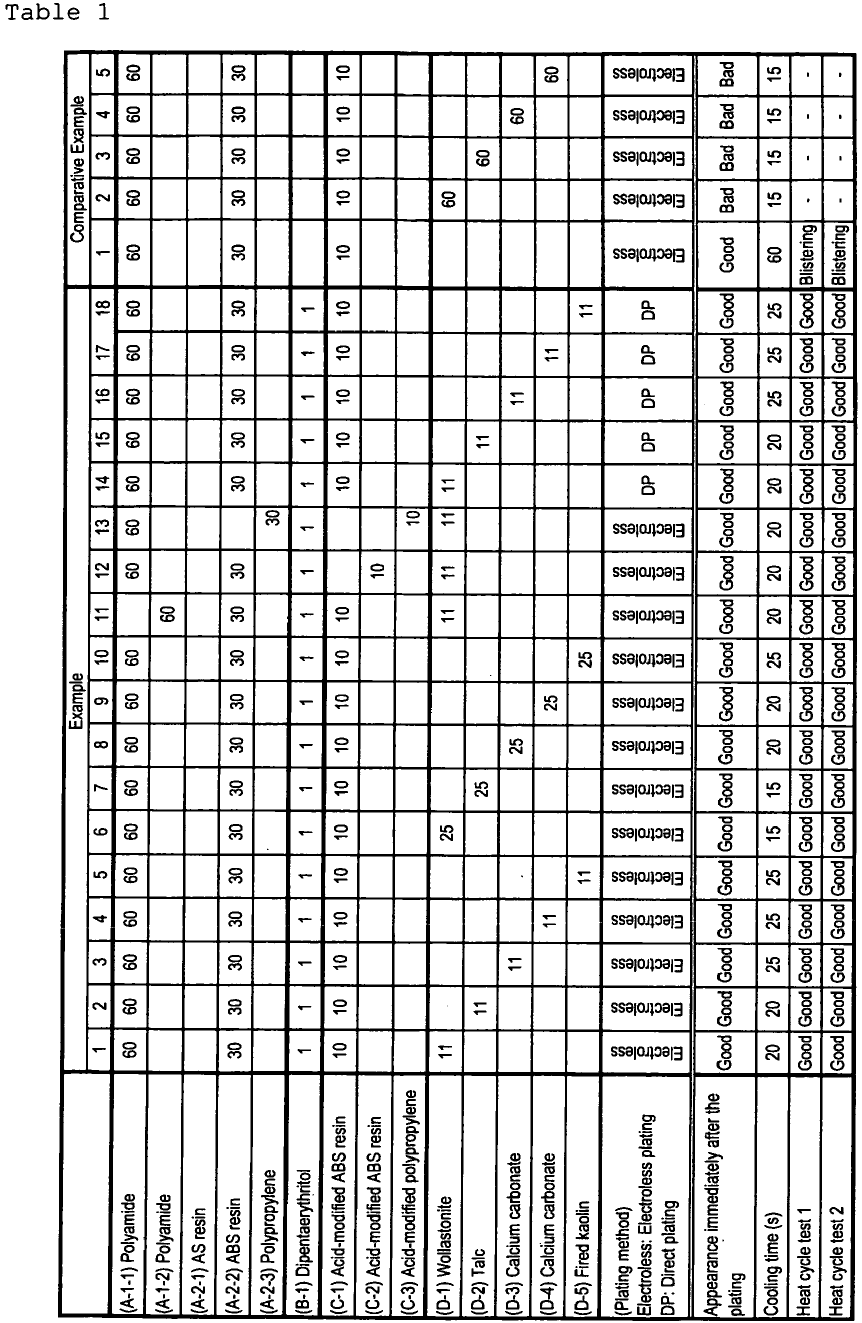

After the copper plating, visual evaluation on the appearance was given immediately after the plating. The specimen with smooth surface was evaluated as "Good", and the specimen with rough surface was evaluated as "Bad". The specimen of "Bad" evaluation was not subjected to the heat cycle test.

As of the evaluations in the heat cycle tests given in Table 1, the term "Good" indicates that the visual observation recognized no change or very little change between the appearance immediately after the plating and the appearance after the heat cycle test, while the term "Blistering" indicates that the visual observation identified separation of plating layer from the resin molded article in a part.

As for the cooling time necessary for die-releasing after the injection molding, Example 1 showed 20 seconds, while Comparative Example 1 which did not contain inorganic filler showed 60 seconds. The cooling time increased from 10 seconds at an interval of 5 seconds. The time that performed die-releasing without damaging the resin molded article was determined as the cooling time.

The plated resin molded articles of Comparative Examples 2 to 5 were significantly inferior to those of Examples 1 to 18 in the smoothness of plating surface immediately after the plating. A presumable reason for the inferiority is the following. In Comparative Examples 2 to 5, a larger amount of an inorganic filler having a larger particle size than in Example was added, which resulted in dissolving the inorganic filler in the step of contacting with hydrochloric acid to roughen the surface of the resin molded article.

On the other hand, Examples 1 to 18 used smaller quantity of smaller size of inorganic filler than those of Comparative Examples, thus the surface of the resin molded article was presumably not roughened even in the step of contacting with hydrochloric acid. In particular, Example 3 and Example 8 which used smaller particle size of (D-3) calcium carbonate gave beautiful appearance compared with that of other Examples.

## Claims

1. A plated resin molded article having a metal plating layer on the surface thereof, which resin molded article is made of a resin composition comprising:
(A) a synthetic resin, wherein the synthetic resin of the (A) component contains 10 to 90% by mass of (A-1) a resin having 0.6% or higher water absorption in water at 23°C after 24 hours, (ISO62), and 10 to 90% by mass of (A-2) a resin having less than 0.6% of water absorption in water at 23°C after 24 hours, (ISO62);
(B) a polyhydric alcohol having a solubility in water (25°C) ranging from 0.01 g/100 g to 10 g/100 g in a quantity of 0.1 to 20 parts by mass relative to 100 parts by mass of the (A) component;
(C) a compatibilizer in a quantity of 1 to 20 parts by mass relative to 100 parts by mass of the (A) component; and
(D) an inorganic filler in a quantity of 1 to 55 parts by mass relative to 100 parts by mass of the sum of (A), (B) and (C) components,
wherein said resin molded article is not treated by etching with an acid containing chromium and/or manganese.

2. The plated resin molded article according to claim 1, wherein the inorganic filler of the (D) component is selected from the group consisting of talc, calcium carbonate, wollastonite and kaolin.

## Patentansprüche

1. Plattierter Harzformkörper mit einer Metallplattierschicht auf dessen Oberfläche, wobei der Harzformkörper aus einer Harzzusammensetzung hergestellt ist, umfassend:
(A) ein Kunstharz, wobei das Kunstharz der Komponente (A) 10 bis 90 Massen-% eines Harzes (A-1) mit 0,6% oder mehr Wasserabsorption in Wasser bei 23°C nach 24 Stunden (ISO62), und 10 bis 90 Massen-% eines Harzes (A-2) mit weniger als 0,6% Wasserabsorption in Wasser bei 23°C nach 24 Stunden (ISO62) enthält;
(B) einen mehrwertigen Alkohol mit einer Löslichkeit in Wasser (25°C) im Bereich von 0,01 g/100 g bis 10 g/100 g in einer Menge von 0,1 bis 20 Massenteilen, bezogen auf 100 Massenteile der Komponente (A);
(C) einen Kompatibilisator in einer Menge von 1 bis 20 Massenteilen, bezogen auf 100 Massenteile der Komponente (A); und
(D) einen anorganischen Füllstoff in einer Menge von 1 bis 55 Massenteilen, bezogen auf 100 Massenteile der Summe der Komponenten (A), (B) und (C),
wobei der Harzformgegenstand nicht durch Ätzen mit einer chrom- und/oder manganhaltigen Säure behandelt wird.

2. Plattierter Harzformkörper nach Anspruch 1, wobei der anorganische Füllstoff der Komponente (D) ausgewählt ist aus der Gruppe, bestehend aus Talk, Calciumcarbonat, Wollastonit und Kaolin.

## Revendications

1. Article moulé en résine plaquée ayant une couche de placage métallique sur sa surface, lequel article moulé en résine est constitué d'une composition de résine comprenant :
(A) une résine synthétique, la résine synthétique du composant (A) contenant de 10 à 90 % en masse de (A-1) une résine ayant une absorption d'eau de 0,6 % ou plus dans de l'eau à 23 °C au bout de 24 heures, (ISO 62), et de 10 à 90 % en masse de (A-2) une résine ayant une absorption d'eau inférieure à 0,6 % dans de l'eau à 23 °C au bout de 24 heures, (ISO 62) ;
(B) un alcool polyhydrique ayant une solubilité dans l'eau (25 °C) allant de 0,01 g/100 g à 10 g/100 g en une quantité de 0,1 à 20 parties en masse par rapport à 100 parties en masse du composant (A) ;
(C) un agent compatibilisant en une quantité de 1 à 20 parties en masse par rapport à 100 parties en masse du composant (A) ; et
(D) une charge inorganique en une quantité de 1 à 55 parties en masse par rapport à 100 parties en masse de la somme des composants (A), (B) et (C),
ledit article moulé en résine n'étant pas traité par gravure chimique avec un acide contenant du chrome et/ou du manganèse.

2. Article moulé en résine plaquée selon la revendication 1, la charge inorganique (D) étant choisie dans le groupe constitué de talc, carbonate de calcium, wollastonite et kaolin.
